# EUROPEAN PATENT APPLICATION

(11) **EP 1 870 698 A1**
(43) Date of publication of application: **26.12.2007**
(21) Application number: 06712214.3
(22) Date of filing: 24.01.2006
(51) Int. Cl.: G01N 23/12

(54) **DEVICE AND METHOD FOR DETECTING FOREIGN MATTER, AND DEVICE AND METHOD FOR REMOVING FOREIGN MATTER**

(30) Priority: 25.03.2005 JP 2005089844
(71) Applicant: Nippon Petroleum Refining Company Limited, Minato-ku, Tokyo 1058412 (JP)
(72) Inventor: SATO, Norihiko NIPPON PETROLEUM REFINING COMP. LTD, Yamaguchi 7400061 (JP)
(74) Representative: Grünecker, Kinkeldey, Stockmair & Schwanhäusser Anwaltssozietät
(86) International application number: PCT/JP2006/300998
(87) International publication number: WO 2006/103819

(57) **Abstract**

The contaminant detector of the invention is a contaminant detector for detection of solid contaminants present in coke, and comprises X-ray irradiation means that irradiates X-rays onto coke to be evaluated for the potential presence of solid contaminants; X-ray intensity measuring means that measures the intensity of transmitted X-rays in a prescribed region of X-rays that are transmitted through coke to be evaluated; and determining means that compares the numerical value for the transmitted X-ray intensity against a prescribed threshold value and, based on the results of the comparison, determines whether or not the coke to be evaluated includes solid contaminants in the prescribed region.

## Description

### Technical Field

The present invention relates to a detector and detection method for contaminants included in coke, and to a contaminant removal apparatus and removal method.

### Background Art

Coke is produced using petroleum or coal as the starting material, and it is classified as either petroleum coke or coal coke depending on the starting material. Petroleum coke is produced together with gas, cracked gasoline and cracked light oil, through a coking step in which the petroleum heavy fraction is subjected to thermal decomposition at a high temperature of about 500°C. The petroleum coke obtained by the coking step contains around 10% volatile components, and petroleum coke in this state is known as raw coke. When raw coke is subjected to heat treatment at a high temperature of about 1500°C using a calcining apparatus for removal of the volatile components in the raw coke, the result is calcined coke.

Brick is used as the refractory material on the inner walls of calcining apparatuses used to produce calcined coke from raw coke. However the brick flakes off from the inner walls, and the brick fragments, or fragments of the various metals attached to equipment surrounding the belt conveyor used to convey the coke, constitute solid contaminants that can become included as impurities in the calcined coke.

Incidentally, calcined coke is used as a carbon material for a variety of uses, and for example it is used as a material for graphite electrodes in electric furnaces that melt scrap iron for iron recycling. Because the scrap iron is melted at high temperature in the electric furnace used for iron recycling, the surface temperature of the graphite electrodes can reach up to about 3000°C. For improved performance and longer life of graphite electrodes used under such high temperature conditions, it is essential to minimize the impurities in the calcined coke starting material. When impurities are present in the calcined coke, therefore, it is desirable to remove them to the greatest degree possible.

Brick and metal fragments present in calcined coke have conventionally been detected by worker inspection and manually removed.

Patent document 1 describes an apparatus used to detect solid contaminants in coke, whereby coke product is released from the end point of the coke conveyer and impulsive vibration caused by impact of the released coke product with the walls is detected to identify solid contaminants in the coke product.
[Patent document 1] Japanese Unexamined Patent Publication HEI No. 9-95674

### Disclosure of the Invention

### Problem to be Solved by the Invention

It is difficult, however, to precisely identify brick by visual examination. Especially since calcined coke is continuously produced and conveyed during the period of a day in most cases, an undue burden is placed on workers when they must identify and remove brick fragments and the like.

The solid contaminant detector of Patent document 1 employs impulsive vibration to distinguish between coke product and solid contaminants. The solid contaminants that can be detected are therefore limited to relatively large conglomerate brick with particle sizes of greater than about 300 mm and masses of about 30-50 kg. Difficulties are encountered, therefore, when attempting to detect brick or metal fragments smaller than this range using the solid contaminant detector of Patent document 1.

It is therefore an object of the present invention to provide a contaminant detector and detection method that allow detection of solid contaminants in coke to a satisfactory high degree of precision, as well as a contaminant removal apparatus and removal method which allow sufficient removal of detected solid contaminants.

### Means for Solving the Problem

The invention provides a contaminant detector for detection of solid contaminants present in coke, comprising X-ray irradiation means that irradiates X-rays onto coke which is to be evaluated that potentially includes solid contaminants, X-ray intensity measuring means that measures the intensity of transmitted X-rays in a prescribed region of X-rays that are transmitted through coke to be evaluated, and determining means that compares the value for the transmitted X-ray intensity against a prescribed threshold value and, based on the results of the comparison, determines whether or not the coke to be evaluated includes solid contaminants in the prescribed region.

The contaminant detector of the invention irradiates X-rays onto coke to be evaluated and detects the intensity of X-rays transmitted through the coke to be evaluated. This can yield a transmitted X-ray intensity distribution in the prescribed region in which the transmitted X-ray intensity is measured (hereinafter referred to as "X-ray intensity measuring region").

The solid contaminants are brick, metal fragments or the like. Since the solid contaminants have a higher density than coke, fewer of the X-rays irradiated onto the solid contaminants are transmitted. Consequently, solid contaminants in the X-ray intensity measuring region result in a lower transmission intensity for X-rays irradiated onto the solid contaminants, compared to the transmission intensity for the X-rays that are irradiated onto the coke. As a result, the areas with lower transmission intensity than the prescribed threshold can be detected as solid contaminants. The threshold may be determined based on the difference in density of the coke and solid contaminants.

The X-ray intensity measuring means in the contaminant detector of the invention preferably comprises a plurality of detecting elements configured rectilinearly, and converting means that converts the X-rays detected by the plurality of detecting elements to an electrical signal.

The plurality of detecting elements configured in this manner allow continuous detection of X-rays (transmitted X-rays) that are transmitted through the coke to be evaluated moving at a prescribed relative speed with respect to the plurality of detecting elements. Also, since the transmitted X-rays that are continuously detected by the plurality of detecting elements are converted to an electrical signal by the converting means, it is possible to output the transmitted X-ray intensity to an output device in a time-serial manner.

Moreover, increasing the number of detecting elements can widen the scope of the X-ray intensity measuring region, thereby making it easier to define the X-ray intensity measuring region so as to sufficiently cover the region in which the transmitted X-ray intensity is to be measured. If the X-ray intensity measuring region sufficiently covers the region in which the transmitted X-ray intensity is to be measured, it will be possible to achieve satisfactory detection regardless of where the solid contaminants are present in the coke to be evaluated.

The contaminant detector of the invention preferably further comprises simulated solid contaminant placement means that places simulated solid contaminants having a similar density to the solid contaminants in the aforementioned region.

The simulated solid contaminant placement means is used to examine whether or not the determining means can identify the simulated solid contaminants as solid contaminants. If the simulated solid contaminants are not identified as solid contaminants, the threshold is then adjusted to allow the simulated solid contaminants to be identified as solid contaminants, thereby resetting the threshold to allow reliable detection of solid contaminants.

Placement of the simulated solid contaminants in the X-ray intensity measuring region is carried out for the purpose of adjusting the threshold in this manner. That the simulated solid contaminants have a "similar density to the solid contaminants" means that the density of the simulated solid contaminants is sufficiently similar to that of the solid contaminants so as to allow the aforementioned purpose to be achieved.

The contaminant detector of the invention preferably further comprises conveying means to convey the coke, where the coke to be evaluated is conveyed by the conveying means.

When the contaminant detector comprises conveying means, the coke to be evaluated is conveyed to the X-ray intensity measuring region, thus allowing X-ray irradiation of the coke to be evaluated and measurement of the intensity of X-rays transmitted through the coke to be evaluated. Automated detection of solid contaminants included in the coke to be evaluated can therefore be easily accomplished.

The contaminant detector of the invention preferably further comprises conveying means to convey the coke, where the coke to be evaluated is conveyed by the conveying means, and the plurality of detecting elements are configured rectilinearly in the direction perpendicular to the direction of conveying by the conveying means.

When the contaminant detector comprises conveying means, the coke to be evaluated is conveyed to the X-ray intensity measuring region, thus allowing X-ray irradiation of the coke to be evaluated and measurement of the intensity of X-rays transmitted through the coke to be evaluated. Automated detection of solid contaminants included in the coke to be evaluated can therefore be easily accomplished.

The plurality of detecting elements configured in this manner allow continuous detection of X-rays transmitted through the coke to be evaluated that moves at a prescribed relative speed with respect to the plurality of detecting elements. Consequently, it is possible to accomplish measurement even in cases where the coke for which the transmitted X-ray intensity is to be measured moves at a prescribed speed and the transmitted X-ray intensity must be continuously measured. Also, since the transmitted X-rays that are continuously detected by the plurality of detecting elements are converted to an electrical signal by the converting means, it is possible to output the transmitted X-ray intensity to an output device in a time-serial manner.

Moreover, since it is possible to widen the scope of the X-ray intensity measuring region by increasing the number of detecting elements, it is easier to define the X-ray intensity measuring region so as to sufficiently cover the region in which the transmitted X-ray intensity is to be measured. If the X-ray intensity measuring region sufficiently covers the region in which the transmitted X-ray intensity is to be measured, it will be possible to achieve satisfactory detection regardless of where the solid contaminants are present in the coke to be evaluated.

The conveying means in the contaminant detector of the invention is preferably a belt conveyor provided with a belt member on which the coke to be evaluated is loaded and driving roll members that drive the belt member.

Using a belt conveyor as the conveying means allows the coke to be evaluated to be continuously conveyed to the X-ray intensity measuring region. It will thus be possible to irradiate the coke to be evaluated with X-rays in the X-ray intensity measuring region and continuously measure the transmitted X-ray intensity of the X-rays transmitted through the coke to be evaluated. The solid contaminants in the coke to be evaluated can thereby be continuously detected. Also, the belt conveyor produces a constant conveying speed for the coke to be evaluated.

The contaminant removal apparatus of the invention is a contaminant removal apparatus comprising the aforementioned contaminant detector, and it is provided with solid contaminant removal means that removes the solid contaminants from the coke to be evaluated when solid contaminants are determined to be present by the determining means of the contaminant detector.

The contaminant removal apparatus of the invention comprises the contaminant detector of the invention as described above. The contaminant detector of the invention irradiates X-rays onto coke to be evaluated and detects the intensity of X-rays transmitted through the coke. It is therefore possible to obtain a transmitted X-ray intensity distribution in the X-ray intensity measuring region. Since the solid contaminants such as brick or metal fragments have a higher density than coke, fewer of the X-rays irradiated onto the solid contaminants are transmitted. Consequently, solid contaminants in the X-ray intensity measuring region result in a lower transmission intensity for X-rays irradiated onto the solid contaminants, compared to the transmission intensity for the X-rays that are irradiated onto the coke, and the sections with lower transmission intensity than the prescribed threshold are detected as solid contaminants.

Because the contaminant removal apparatus of the invention comprises the solid contaminant removal means that removes solid contaminants detected in this manner, it is possible to obtain coke with a satisfactorily reduced solid contaminant level.

The contaminant removal apparatus of the invention is also a contaminant removal apparatus further comprising conveying means that conveys the coke to be evaluated, and having solid contaminant removal means that removes the solid contaminant from the coke to be evaluated when solid contaminants are determined to be present by the determining means of the contaminant detector, the solid contaminant removal means being provided with a solid contaminant container in which the solid contaminants are held and conveying destination switching means that switches the conveying destination of the coke to be evaluated to the solid contaminant container.

The contaminant removal apparatus of the invention employs the conveying destination switching means to switch the conveying destination of the coke to be evaluated to the solid contaminant container, so that the solid contaminants are removed along with a portion of the coke. The solid contaminants present in the coke to be evaluated can thus be more reliably removed.

In the contaminant removal apparatus of the invention, the conveying destination switching means preferably performs automatic switching of the conveying destination for the coke to be evaluated to the solid contaminant container after a specified degree of time has elapsed from the point at which the solid contaminants are in the X-ray intensity measuring region.

When using the contaminant removal apparatus of the invention, the conveying destination of the coke to be evaluated is the coke-receiving tank as long as it is determined by the determining means that no solid contaminants are present in the X-ray intensity measuring region. On the other hand, when it is determined by the determining means that solid contaminants are present in the X-ray intensity measuring region, the conveying destination of the coke to be evaluated is automatically switched to the solid contaminant container by the conveying destination switching means after a specified period of time has elapsed. Removal of detected solid contaminants is more easily automated as a result.

The present invention also provides a contaminant detection method for detection of solid contaminants present in coke, the method comprising an X-ray irradiation step wherein X-rays are irradiated onto coke to be evaluated that potentially includes solid contaminants, an X-ray intensity measuring step wherein the transmitted X-ray intensity is measured in a prescribed region of X-rays transmitted through the coke to be evaluated, and a determining step wherein the numerical value of the transmitted X-ray intensity is compared against a prescribed threshold value and it is determined whether or not solid contaminants are present in coke to be evaluated in the aforementioned prescribed region based on the results of the comparison.

According to the contaminant detection method of the invention, X-rays are irradiated onto coke to be evaluated and the intensity of X-rays transmitted through the coke to be evaluated is measured. It is therefore possible to obtain a transmitted X-ray intensity distribution in the X-ray intensity measuring region. Since the solid contaminants such as brick or metal fragments have a higher density than coke, they allow transmission of fewer of the X-rays irradiated onto the solid contaminants. Consequently, solid contaminants in the X-ray intensity measuring region result in a lower transmission intensity for X-rays irradiated onto the solid contaminants, compared to the transmission intensity for the X-rays that are irradiated onto the coke, and the sections with lower transmission intensity than the prescribed threshold can therefore be detected as containing solid contaminants. The threshold value may be determined based on the difference in density of the coke and solid contaminants.

For the contaminant detection method of the invention, preferably, the transmitted X-ray intensity is detected by a plurality of detecting elements configured rectilinearly in the X-ray intensity measuring step and the detected transmitted X-ray intensity is outputted as an electrical signal.

The plurality of detecting elements configured in this manner allow continuous detection of X-rays transmitted through the coke to be evaluated that move at a prescribed relative speed with respect to the plurality of detecting elements. When the transmitted X-ray intensity detected by the detecting element is outputted as an electrical signal, it is possible to obtain a transmitted X-ray intensity distribution in the X-ray intensity measuring region in a time-serial manner.

Moreover, increasing the number of detecting elements can widen the scope of the X-ray intensity measuring region, thereby making it easier to define the X-ray intensity measuring region so as to sufficiently cover the region in which the transmitted X-ray intensity is to be measured. If the X-ray intensity measuring region sufficiently covers the region in which the transmitted X-ray intensity is to be measured, it will be possible to achieve satisfactory detection regardless of where the solid contaminants are present in the coke to be evaluated.

The contaminant detection method of the invention preferably also comprises a step in which simulated solid contaminants with a similar density to solid contaminants are placed in the X-ray intensity measuring region at a prescribed time interval.

By placing simulated solid contaminants in the X-ray intensity measuring region at a prescribed time interval, it is possible to examine, during the prescribed time interval, whether or not the simulated solid contaminants are identified as solid contaminants in the determining step. If the simulated solid contaminants are not identified as solid contaminants, the threshold is then adjusted to allow the simulated solid contaminants to be identified as solid contaminants, thereby resetting the threshold to allow reliable detection of solid contaminants.

Placement of the simulated solid contaminants in the X-ray intensity measuring region is carried out for adjustment of the threshold in this manner. That the simulated solid contaminants have a "similar density to the solid contaminants" means that the density of the simulated solid contaminants is sufficiently similar to that of the solid contaminants so as to allow the aforementioned purpose to be achieved.

In the contaminant detection method of the invention, the coke to be evaluated is preferably coke that is being conveyed. By irradiating the conveyed coke to be evaluated with X-rays, it is possible to successively measure the intensity of transmitted X-rays that are transmitted through the conveyed coke to be evaluated. Automated detection of solid contaminants included in the coke to be evaluated can therefore be easily accomplished.

For the contaminant detection method of the invention, preferably the conveyed coke to be evaluated is irradiated with X-rays in the X-ray irradiation step, and the transmitted X-ray intensity is detected with the plurality of detecting elements configured rectilinearly in the direction perpendicular to the direction in which the coke to be evaluated is conveyed in the X-ray intensity measuring step.

By irradiating the conveyed coke to be evaluated with X-rays, it is possible to successively measure the intensity of transmitted X-rays that are transmitted through the conveyed coke to be evaluated. Automated detection of solid contaminants included in the coke to be evaluated can therefore be easily accomplished.

The plurality of detecting elements configured in this manner allow continuous detection of X-rays transmitted through the coke to be evaluated that moves at a prescribed relative speed with respect to the plurality of detecting elements. When the transmitted X-ray intensity detected by the detecting element is outputted as an electrical signal, the distribution of transmitted X-ray intensity in the X-ray intensity measuring region can be obtained in a time-serial manner.

Moreover, increasing the number of detecting elements can widen the scope of the X-ray intensity measuring region, thereby making it easier to define an X-ray intensity measuring region that can sufficiently cover the zone in which the transmitted X-ray intensity is to be measured. If the X-ray intensity measuring region sufficiently covers the zone in which the transmitted X-ray intensity is to be measured, it will be possible to achieve satisfactory detection regardless of where the solid contaminants are present in the coke to be evaluated.

The contaminant removal method of the invention comprises a contaminant detecting step in which the solid contaminants are detected by the aforementioned contaminant detection method, and a contaminant removal step in which the detected solid contaminants are removed from the coke to be evaluated.

According to the contaminant detection method of the invention, X-rays are irradiated onto coke to be evaluated and the intensity of X-rays transmitted through the coke to be evaluated is measured. It is therefore possible to obtain a transmitted X-ray intensity distribution in the X-ray intensity measuring region. Since solid contaminants such as brick and metal fragments have a higher density than coke, they permit transmission of fewer of the X-rays that are irradiated onto the solid contaminants. Consequently, solid contaminants in the X-ray intensity measuring region result in a lower transmission intensity for X-rays irradiated onto the solid contaminants, compared to the transmission intensity for the X-rays that are irradiated onto the coke, and the sections with lower transmission intensity than the prescribed threshold value are detected as solid contaminants.

Also according to the contaminant removal method of the invention, the aforementioned contaminant detection method is carried out in the contaminant detecting step and the solid contaminants detected in the contaminant detecting step are removed from the coke to be evaluated during the contaminant removal step. It is therefore possible to obtain coke with a satisfactorily reduced content of solid contaminants.

The contaminant removal method of the invention comprises a moving contaminant detecting step wherein solid contaminants are detected by the contaminant removal method during which the conveyed coke to be evaluated is irradiated with X-rays, and a conveying destination switching step wherein the conveying destination of the coke to be evaluated that contains solid contaminants is switched.

According to the contaminant removal method of the invention, the moving contaminant detecting step accomplishes detection of the solid contaminants while the conveying destination switching step switches the conveying destination of the coke to be evaluated, so that the detected solid contaminants are removed with a portion of the coke. The solid contaminants present in the coke to be evaluated can thus be more reliably removed.

In the conveying destination switching step of the contaminant removal method of the invention, preferably the conveying destination of the coke to be evaluated is automatically switched after a prescribed period of time has elapsed from the point at which the solid contaminants are detected in the prescribed region.

According to the contaminant removal method of the invention, when solid contaminants are determined to be present in the X-ray intensity measuring region in the determining step, the conveying destination of the coke to be evaluated containing solid contaminants is automatically switched after a prescribed period of time has elapsed. Removal of detected solid contaminants is more easily automated as a result.

### Effect of the Invention

According to the invention it is possible to provide a contaminant detector and detection method that allow detection of solid contaminants in coke to a high degree of precision, as well as a contaminant removal apparatus and removal method which allow reliable removal of detected solid contaminants.

### Brief Description of the Drawings

Fig. 1 is an oblique view of an embodiment of a solid contaminant detector according to the invention.
Fig. 2 is a view showing the X-ray intensity measuring region and distribution of the measured transmitted X-ray intensity for the solid contaminant detector shown in Fig. 1.
Fig. 3 is an oblique view of another embodiment of a solid contaminant detector according to the invention.
Fig. 4 is a schematic view of an embodiment of a solid contaminant removal apparatus according to the invention.
Fig. 5 is a schematic view showing a solid contaminant removal apparatus according to the invention which is removing solid contaminants.

### Explanations of Numerals

1: Solid contaminants, 2: calcined coke, 3: coke to be evaluated, 5: X-ray irradiation device (X-ray irradiation means), 6: line sensor camera (X-ray detecting means), 6a: detecting element, 6b: A/D converter (converting means), 8: X-rays, 10: belt conveyor (conveying means), 16: determining system (determining means), 20: contaminant detector, 30: simulated solid contaminant driving device (simulated solid contaminant placement means), 35a, b: simulated solid contaminants, 40: contaminant removal mechanism (solid contaminant removal means), 41: contaminant holding tank (contaminant container), 42: dumper (conveying destination switching means), 50: contaminant removal apparatus.

### Best Modes for Carrying Out the Invention

Embodiments of the invention will now be explained in detail with reference to the accompanying drawings. Throughout the explanation of the drawings, identical or corresponding elements will be referred to by like reference numerals and will be explained only once.

An embodiment of the contaminant detector of the invention will be explained after first describing coke which is supplied to the contaminant detector of this embodiment and solid contaminants that are potentially present therein.

The coke supplied to the contaminant detector of this embodiment is calcined coke produced from a petroleum heavy fraction, and the solid contaminants potentially present therein are brick and metal fragments.

The calcined coke is produced using a calcining apparatus for heat treatment of raw coke obtained by thermal decomposition of a petroleum heavy fraction at a temperature of 450-550°C. The calcining apparatus that produces calcined coke by heat treatment of raw coke usually comprises a heating furnace, known as a kiln, and a cooler for cooling of the heat treated coke.

The kiln is a cylindrical heating furnace which is inclined several degrees from the horizontal direction, and it is rotatable around the lengthwise axis of the cylinder. For production of calcined coke, raw coke is supplied from an opening at the top of the kiln that is rotating at a constant speed. The internal temperature of the kiln is controlled to 1000-1500°C depending on the location, and calcining of the supplied raw coke proceeds as it moves toward the lower end, yielding calcined coke at a higher temperature from the opening at the bottom of the kiln.

The high-temperature calcined coke is then fed to the cooler. The cooler is a cylindrical cooling apparatus which is inclined several degrees from the horizontal direction, and it is rotatable around the axis of the lengthwise direction of the cylinder. The high-temperature calcined coke is then cooled by cooling water circulating through the cooler.

The calcined coke which has been heat treated and cooled while moving in the rotating apparatus in this manner contains needle-like primary particles, and the calcined coke containing the aggregated primary particles is sometimes referred to as "needle coke".

Solid contaminants potentially present in the calcined coke produced in this manner are brick and metal fragments. The solid contaminants are produced primarily in the kiln of the calcining apparatus. Brick is used as the refractory material for the inner walls of the kiln and flakes off from the inner walls as brick fragments while metal fragments are produced from the equipment surrounding the belt conveyor, and these become included in the calcined coke as solid contaminants.

The particle sizes of the potentially present brick fragments are no greater than 100 mm, and their densities are 2-5 g/cm³. The potentially present metal fragments include bolts, nuts and washers, and they have sides with lengths of no greater than 100 mm and densities of 5-10 g/cm³. The metals of the metal fragments include stainless steel, tungsten, iron, carbon steel and the like.

The particle sizes of the calcined coke produced by the calcining apparatus, on the other hand, are 1-30 mm while their densities are 0.5-1.5 g/cm³.

### (Contaminant detector)

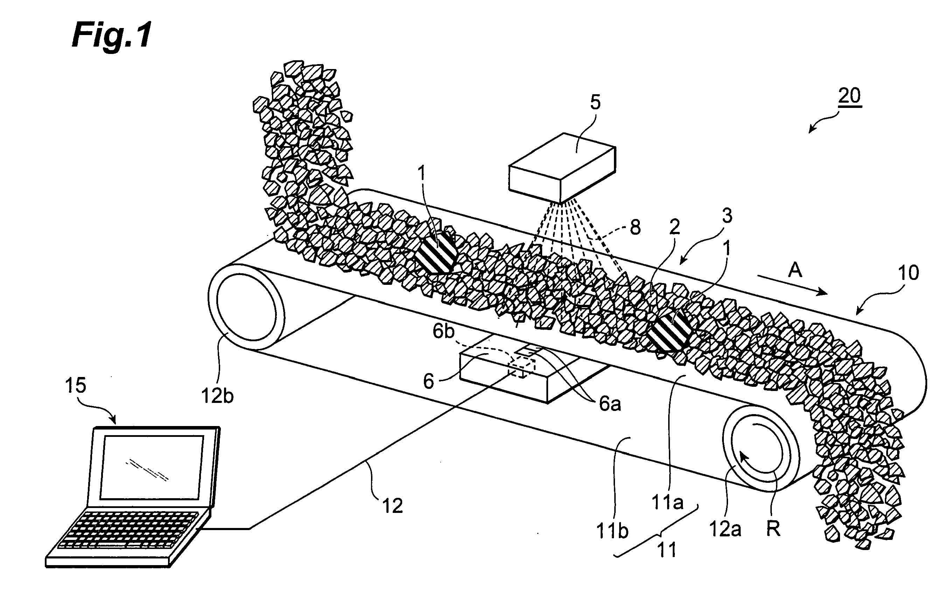

An embodiment of a contaminant detector according to the invention will now be explained with reference to Fig. 1. Fig. 1 is an oblique view of a preferred embodiment of a solid contaminant detector according to the invention, showing X-rays being irradiated onto conveyed coke to be evaluated.

As shown in Fig. 1, the contaminant detector 20 comprises a belt conveyor (conveying means) 10, X-ray irradiation device (X-ray irradiation means) 5, line sensor camera (X-ray intensity measuring means) 6 and a personal computer provided with determining means (determining means) 15.

Coke to be evaluated 3 that contains solid contaminants 1 and coke 2 is supplied to the belt conveyor 10 from the exit port of the calcining apparatus. The belt conveyor 10 comprises a belt section 11 on the surface of which the coke to be evaluated 3 is loaded, and roll members 12a, b that are in contact with the inner side of the belt section 11 so as to be able to drive the belt section 11.

The width of the belt section 11 is preferably 10-100 cm. If the width of the belt section 11 is less than 10 cm, the amount of calcined coke that can be conveyed per unit time by the belt conveyor 10 will be reduced, thus impairing the capacity of the contaminant detector to treat the calcined coke. On the other hand, if the width of the belt section 11 is greater than 100 cm, the X-ray intensity measuring region width will be too great and as a result it will be necessary to use a line sensor camera with a wide measurable range, thus tending to increase equipment cost.

The roll member 12a is connected to a rotary drive unit such as a motor (not shown). Rotation of the roll member 12a in the direction R shown in Fig. 1 drives the belt section 11 so that the coke to be evaluated 3 loaded on the belt section 11 is conveyed in the direction A shown in Fig. 1. That is, the coke to be evaluated 3 that is continuously supplied from the calcining apparatus to the belt section 11 at the roll member 12b end is conveyed by the belt conveyor 10 in the direction A shown in Fig. 1, and then supplied from the edge of the roll member 12a end to the next device.

The X-ray irradiation device 5 and line sensor camera 6 are situated in the path of conveyance of the coke to be evaluated 3 which is being conveyed by the belt conveyor 10.

The X-ray irradiation device 5 irradiates X-rays 8 onto the coke to be evaluated 3 that is loaded on the belt section 11, and it is positioned above the belt section 11. The X-ray irradiation device 5 used may be an industrial X-ray examining device such as MG165/2.25 (product of Yxlon International, KK.). When the aforementioned industrial X-ray examining device is used as the X-ray irradiation device, the distance between the X-ray irradiation device 5 and the surface of the belt section 11 is preferably 50-150 cm, as the distance above the surface of the belt section 11. This will help to ensure a sufficient level of intensity of X-rays reaching the coke to be evaluated 3, as well as a sufficient X-ray irradiation region.

On the other hand, the line sensor camera 6 measures the transmitted X-ray intensity of the X-rays 8 transmitted through the coke to be evaluated 3 and belt section 11, and it is positioned under the belt section 11. The line sensor camera 6 used may be a commercially available product such as C8750-05FC or C8750-10FC (both products of Hamamatsu Photonics, K.K.). The position of the line sensor camera 6 is not particularly restricted so long as it is a position that allows detection of X-rays transmitted through the coke to be evaluated 3. From the standpoint of ensuring a sufficient intensity level for transmitted X-rays reaching the line sensor camera 6, however, it is preferably positioned between the loading section 11a on the belt section 11 with the coke to be evaluated 3 loaded thereon, and the returning section 11b of the belt section 11 which is moving in the direction opposite direction A.

The line sensor camera 6 comprises a plurality of detecting elements 6a and an A/D converter (converting means) 6b. Since the plurality of detecting elements 6a are configured rectilinearly in the direction perpendicular to the conveying direction of the belt section 11, the region in which the transmitted X-ray intensity is measured by the line sensor camera 6 (X-ray intensity measuring region) is in the form of a strip. The number of detecting elements 6a incorporated in the line sensor camera 6 may be determined according to the width of the X-ray intensity measuring region to be set. The detection system for the detecting elements 6a may be a scintillator system. A scintillator system utilizes scintillation by X-rays incident to the detecting elements 6a. That is, when the X-rays are received by the detecting elements 6a of the line sensor camera 6 and the charge generated by reception of the X-rays is converted to digital data by the A/D converter 6b, digital data are obtained for the distribution of the transmitted X-ray intensity. The digital data are sent from the data output terminal of the line sensor camera 6 through a cable 12 to a personal computer (hereinafter referred to simply as "PC") 15 provided with determining means.

At the PC 15, the distribution of the measured transmitted X-ray intensity in the X-ray intensity measuring region is incorporated by a determining system (determining means) that performs data processing and image processing. The determining system determines whether or not solid contaminants are present in the X-ray intensity measuring region.

### (Contaminant detection method)

A method for detecting solid contaminants 1 present in coke to be evaluated 3 using the contaminant detector 20 of the aforementioned embodiment will now be explained with reference to Fig. 1. For detection of solid contaminants 1, X-rays are irradiated onto the coke to be evaluated 3 being conveyed by the belt conveyor 10 (X-ray irradiation step), and the transmitted X-ray intensity of X-rays transmitted through the coke to be evaluated 3 is measured (X-ray intensity measuring step). Based on the distribution of transmitted X-ray intensity in the X-ray intensity measuring region, it is determined that solid contaminants are present at sections where the transmitted X-ray intensity is lower than a prescribed threshold value (determining step).

Before starting supply of the coke to be evaluated 3 from the calcining apparatus to the belt conveyor 10, the belt section 11 is operated at a prescribed conveying speed. The conveying speed set for the belt conveyor 10 is stored in the determining system as data for the measuring conditions.

The conveying speed of the belt conveyor 10 is preferably in a range that allows the line sensor camera 6 to perform adequately precise measurement of the target of measurement (coke to be evaluated). Specifically, the conveying speed of the coke to be evaluated 3 by the belt conveyor 10 is preferably 4-40 m/min. If the conveying speed of the coke to be evaluated 3 is not at least 4 m/min, the transmitted X-rays imaged at the line sensor camera 6 will tend to be obscure. In addition, since the amount of calcined coke that can be conveyed by the belt conveyor 10 per unit time will be smaller, the capacity of the contaminant detector to treat the calcined coke will tend to be insufficient. On the other hand, if the conveying speed of the coke to be evaluated 3 is greater than 40 m/min, the transmitted X-rays imaged at the line sensor camera 6 will tend to be obscure.

Upon initiating supply of the coke to be evaluated 3 from the calcining apparatus to the belt conveyor 10, X-rays are emitted from the X-ray irradiation device 5 and the X-rays 8 are irradiated onto the conveyed coke to be evaluated 3. The region of the surface of the coke to be evaluated 3 on which the X-rays are irradiated by the X-ray irradiation device (hereinafter referred to as "X-ray irradiation region") sufficiently covers the width of the coke to be evaluated 3 loaded as a strip on the belt section 11. X-rays transmitted through the coke to be evaluated that have passed the X-ray irradiation region are measured by the line sensor camera 6 across the entire loaded width.

The intensity of X-rays transmitted through the coke to be evaluated 3 is measured by the plurality of detecting elements 6a of the line sensor camera 6. Analog data for the measured X-ray intensity are converted to digital data by the A/D converter 6b, and are sent in a time-serial manner from the line sensor camera 6 through the cable 12 to the PC 15.

The method of identifying solid contaminants using the PC 15 will now be explained.

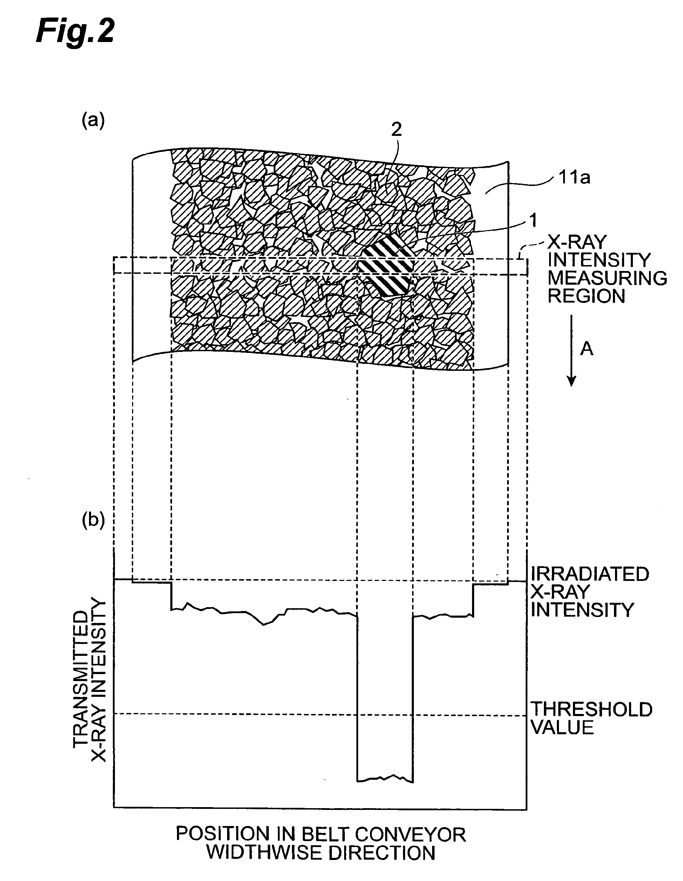

A method of determining whether or not solid contaminants are present will now be explained with reference to Fig. 2. Fig. 2 is a drawing showing the X-ray intensity measuring region and the distribution of measured transmitted X-ray intensity, obtained using the contaminant detector 20 of this embodiment. As shown in Fig. 2, entry of solid contaminants 1, being conveyed in the direction A, into the X-ray intensity measuring region results in a lower degree of transmission among the X-rays irradiated onto the solid contaminants 1, and therefore the transmitted X-ray intensity at sections in which solid contaminants 1 are present is lower than that at other sections. In order to determine the presence of solid contaminants using the determining system incorporated in the PC 15, a threshold value is first established in the determining system. When a transmitted X-ray intensity smaller than the threshold value is detected, it is determined that solid contaminants have passed through the X-ray intensity measuring region. The data used to identify the solid contaminants does not have to be a distribution of values for the transmitted X-ray intensity itself, and instead a data-processed version of the transmitted X-ray intensity distribution may be used.

Establishment of the threshold value will now be explained. The threshold value can be established based on the difference in transmitted X-ray intensity occurring due to differences in the densities of calcined coke and solid contaminants. In order to compensate for fluctuations in the properties of the calcined coke and changes in the performance of the line sensor camera with time, it is preferred to periodically examine whether or not solid contaminants can be reliably detected at the established threshold value. The method of examination may be a method wherein simulated solid contaminants are periodically passed through the X-ray intensity measuring region. The simulated solid contaminants consist of a substance or substances having a density similar to the brick that is to be detected. The simulated solid contaminants used are preferably fragments with particle sizes of about 10 mm, which is the lower limit for detection of brick sizes, and solid contaminants that have actually been detected may even be used as the simulated solid contaminants.

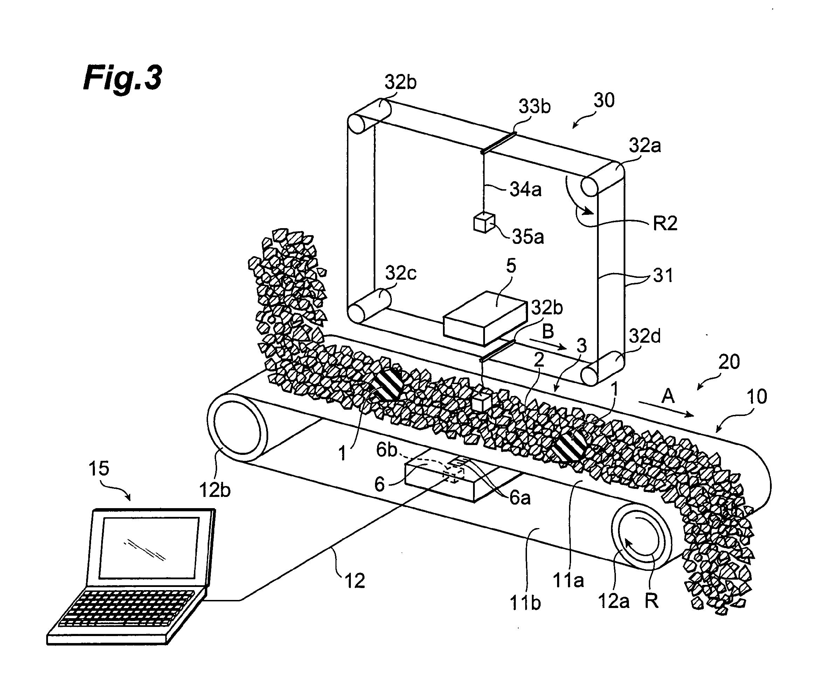

The simulated solid contaminants are passed through the X-ray intensity measuring region by introducing the simulated solid contaminants into the coke to be evaluated 3 on the belt section 11 at a position upstream from the X-ray intensity measuring region. Alternatively, a simulated solid contaminant drive unit (simulated solid contaminant placement means) 30 such as shown in Fig. 3 may be used.

Fig. 3 is an oblique view showing a simulated solid contaminant drive unit 30 combined with a contaminant detector 20. The simulated solid contaminant drive unit 30 comprises driving chains 31, rolls 32a-d that drive the driving chain 31, rod members 33a, b connected to the driving chains 31 and simulated solid contaminants 35a, b suspended with ropes 34a, b at the ends of the rod members 33a, b.

The roll 32a is connected to a rotary drive unit such as a motor (not shown). Rotation of the roll 32a in the direction R2 shown in Fig. 3 drives the driving chains 31, and the rod members 33a, b connected to the driving chains 31 and the simulated solid contaminants 35a, b suspended therefrom move in the direction B shown in Fig. 3. The speed of the rod member 33 moving in the direction B is preferably the same speed as the belt member 11 a moving in the direction A. The rod members 33a, b are preferably made of a material that is sufficiently permeable to X-rays, and phenol-formaldehyde resin (trade name: BAKELITE) or the like may be used. The ropes 34a, b are adjusted to a length so that when the simulated solid contaminants 35a, b pass through the X-ray measuring region, the simulated solid contaminants 35a, b are positioned at the surface of the coke to be evaluated 3. The simulated solid contaminants 35a, b may be kept in a bag that is X-ray transparent.

The simulated solid contaminants are used for periodic examination of how solid contaminants are detected by the determining system of the PC 15, so that solid contaminants present in the calcined coke can be identified with sufficient rapidity even in cases that would tend to have a greater probability of failure to identify solid contaminants. A suitable threshold value can therefore be set in the PC 15.

The PC 15 preferably also comprises, in addition to the determining system described above, transmitting means that transmits a signal indicating that solid contaminants have been determined to be present in the X-ray intensity measuring region (hereinafter referred to as "contaminant detection signal"). If the PC 15 comprises transmitting means, it will be easy to construct a contaminant removal apparatus wherein the contaminant detector 20 is synchronized with the contaminant removal mechanism (solid contaminant removal means) described hereunder, used for removal of solid contaminants detected by the contaminant detector 20, in order to accomplish automatic removal of solid contaminants. That is, it will be possible to construct a contaminant removal apparatus where the contaminant removal mechanism can be activated in synchronization with the contaminant detection signal transmitted from the transmitting means, for automatic removal of solid contaminants.

When constructing a contaminant removal apparatus capable of automatically removing solid contaminants by the contaminant detector 20 and the contaminant removal mechanism synchronized with it, the PC 15 of the contaminant detector 20 is preferably provided with means for transmitting a signal to activate the contaminant removal mechanism (hereinafter reference to as "activating means"). When a dumper, described hereunder, is used as the contaminant removal mechanism, the activating means transmits a signal for activation of the contaminant removal mechanism (hereinafter referred to as "activating signal") to the contaminant removal mechanism when a prescribed period of time has elapsed after receiving the contaminant detection signal. The activating means transmits a signal for reset of the contaminant removal mechanism to the state prior to activation (hereinafter referred to as "reset signal") after the prescribed period of time has elapsed.

The time interval from the point the activating means receives the contaminant detection signal until transmission of the activating signal can be determined by calculation based on the distance from the X-ray intensity measuring region to the contaminant removal mechanism and the conveying speed of the belt conveyor 10. The activating means derives the distance the detected solid contaminants have moved, based on the diameter of the roll member 12a of the belt conveyor 10 and the number of rotations of the roll member 12a after reception of the contaminant detection signal. The activating means then transmits an activating signal timed to arrive when the solid contaminants are approaching the end of the belt conveyor 10.

### (Contaminant removal apparatus)

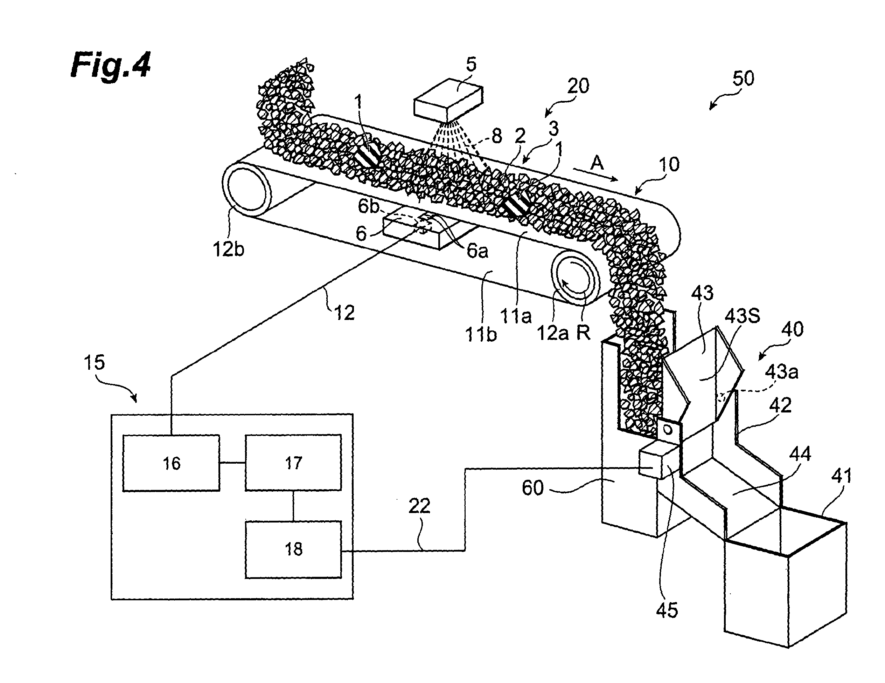

An embodiment of a contaminant removal apparatus according to the invention will now be explained with reference to Fig. 4. Fig. 4 is a schematic view of a preferred embodiment of a solid contaminant removal apparatus according to the invention.

The contaminant removal apparatus 50 of the embodiment shown in Fig. 4 is provided with a contaminant detector 20 and a contaminant removal mechanism (solid contaminant removal mechanism) 40 for removal of solid contaminants detected by the contaminant detector 20. The PC 15 of the contaminant detector 20 shown in Fig. 4 comprises the aforementioned transmitting means 17 and activating means 18 in addition to the determining system 16. When it is determined by the determining system 16 that solid contaminants are present in the X-ray intensity measuring region, the transmitting means 17 transmits a contaminant detection signal. When the activating means 18 then receives the contaminant detection signal, an activating signal and reset signal are transmitted to the contaminant removal mechanism 40.

The contaminant removal mechanism 40 is connected to the contaminant detector 20 via a control cable 22, and more specifically, the contaminant removal mechanism 40 is connected to the activating means 18 of the PC 15 of the contaminant detector 20.

The contaminant removal mechanism 40 comprises a contaminant holding tank (solid contaminant container) 41 that holds the solid contaminants 1, and a dumper (conveying destination switching means) 42 that directs the solid contaminants 1 into the contaminant holding tank 41.

The contaminant holding tank 41 is not particularly restricted so long as it is able to hold solid contaminants.

The dumper 42 is provided with a movable slope 43, a slope 44 and a movable slope activating mechanism 45. The movable slope 43 receives solid contaminants 1 ejected from the end of the belt conveyor 10, and it has a slope surface 43 S to receive the solid contaminants 1. The slope 44 serves to guide solid contaminants 1 received by the movable slope 43 into the contaminant holding tank 41. The movable slope activating mechanism 45 is the mechanism for activation of the movable slope 43. When the determining system of the contaminant detector 20 determines that solid contaminants are present in the X-ray intensity measuring region, the movable slope activating mechanism 45 activates the movable slope 43 after a prescribed period of time has elapsed, and after elapse of an additional prescribed period of time, it is restored to its state before activation.

### (Contaminant removal method)

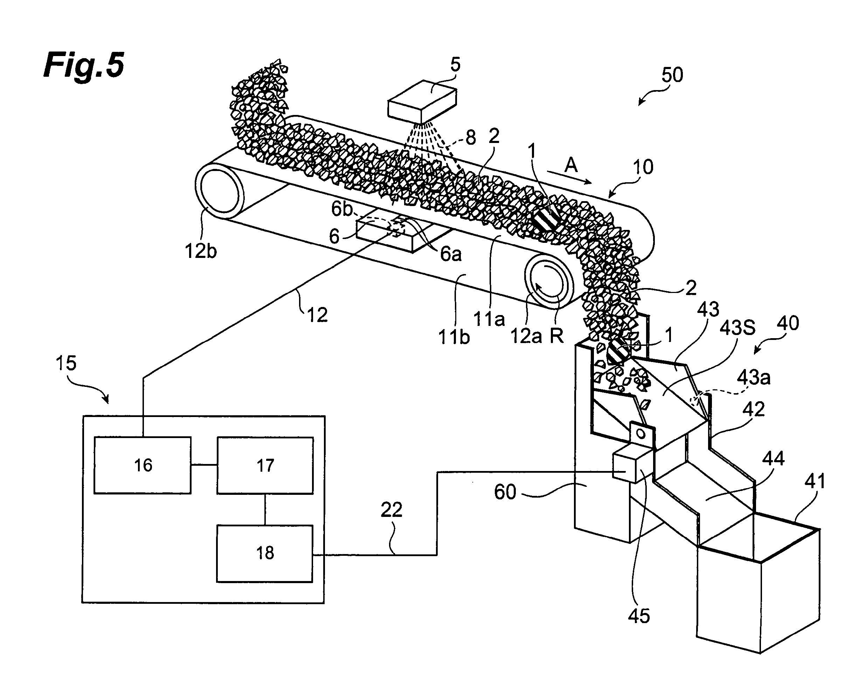

A method for removal of solid contaminants 1 in coke to be evaluated 3 using the contaminant removal apparatus 50 will now be explained with reference to Figs. 4 and 5. During periods when the determining system 16 determines that solid contaminants are not present in the X-ray intensity measuring region, the conveying destination of the calcined coke 2 is the calcined coke holding tank 60 that receives the coke, as shown in Fig. 4.

However, when the determining system 16 determines that solid contaminants are present in the X-ray intensity measuring region, the dumper 42 is activated, i.e. the movable slope 43 of the dumper 42 can receive the solid contaminants 1 as shown in Fig. 5.

When the movable slope activating mechanism 45 receives an activating signal from the activating means 18, the movable slope 43 is activated by the movable slope activating mechanism 45. As shown in Fig. 5, the slope surface 43S of the movable slope 43 is positioned so that the solid contaminants 1 and calcined coke 2 are ejected to fall from the end of the belt conveyor 10. This switches the conveying destination for a portion of the solid contaminants 1 and calcined coke ejected from the end of the belt conveyor 10, so that they are directed to the contaminant holding tank 41 via the slope 44. When the movable slope activating mechanism 45 then receives a reset signal from the activating means 18 after a prescribed period of time has elapsed, the movable slope 43 is reset by the movable slope activating mechanism 45 to its original state shown in Fig. 4.

The movable slope 42 is connected to the slope 44 in a rotatable manner around a joint 43a as the fulcrum. The movable slope activating mechanism 45 that activates the movable slope 42 in the manner described above may employ an air pressure-based cylinder piston or the like.

The time interval for activation of the movable slope 43, i.e. the time interval from reception of the activating signal by the movable slope activating mechanism 45 until subsequent reception of the reset signal, is preferably 0.8-1.2 seconds. If the interval is shorter than 0.8 seconds it may not be possible to sufficiently and reliably remove the solid contaminants 1, while if it is longer than 1.2 seconds the volume of calcined coke removed with the solid contaminants 1 will tend to increase.

This embodiment is explained in the context of detection and removal of solid contaminants potentially present in calcined coke, but the coke may instead be coal coke or petroleum coke other than calcined coke.

Also, the solid contaminants that may be detected and removed according to the invention are not necessarily limited to brick and metal fragments. The contaminant detector of the invention as described above distinguishes between coke and solid contaminants by the difference in transmitted X-ray intensity due to the difference in their densities. It is therefore possible to detect as contaminants any substances having a given difference in density compared to coke, which has a density of 0.5-1.5 g/cm³. Specifically, substances present in coke and having densities of 2-3 times that of coke can be detected and removed.

The contaminant detector of the invention may further comprise a device which flattens the coke loaded on the loading section 11a of the belt section 11 to create a uniform loading height for the coke. Loading the coke at a uniform loading height on the loading section 11 a can adequately prevent variation in the transmitted X-ray intensity caused by irregularities in the coke loading thickness, thereby allowing more reliable detection of solid contaminants present in the coke.

The contaminant detector of the invention is preferably positioned near the coke to be evaluated for more precise detection of solid contaminants, but when it is so positioned it will be in an environment containing dust generated from the coke. In order to prevent dust, therefore, the X-ray irradiation device and line sensor camera may be incorporated into a unit and the unit pressurized. This will help prevent infiltration of dust into the apparatus and thereby enhance the performance stability and lengthen the life of the apparatus. When the internal temperature of such a unit rises, cooling water may be circulated to cool the unit.

The contaminant removal apparatus 50 described above does not have a simulated solid contaminant drive unit 30 as shown in Fig. 3, but the contaminant removal apparatus 50 may alternatively employ a contaminant detector with a simulated solid contaminant drive unit 30.

### Industrial Applicability

According to the invention it is possible to provide a contaminant detector and detection method that allow detection of solid contaminants in coke to a high degree of precision, as well as a contaminant removal apparatus and removal method which allow reliable removal of detected solid contaminants.

## Claims

1. A contaminant detector for detection of solid contaminants present in coke, comprising:
X-ray irradiation means that irradiates X-rays onto coke to be evaluated that potentially includes solid contaminants;
X-ray intensity measuring means that measures the intensity of transmitted X-rays in a prescribed region of X-rays that are transmitted through the coke to be evaluated; and
determining means that compares the value for the transmitted X-ray intensity against a prescribed threshold value and, based on the results of the comparison, determines whether or not the coke to be evaluated includes solid contaminants in the prescribed region.

2. A contaminant detector according to claim 1, wherein the X-ray intensity measuring means comprises a plurality of detecting elements configured rectilinearly, and converting means that converts the X-rays detected by the plurality of detecting elements to an electrical signal.

3. A contaminant detector according to claim 1 or 2, which further comprises simulated solid contaminant placement means that places simulated solid contaminants having a similar density to the solid contaminants in the prescribed region.

4. A contaminant detector according to any one of claims 1 to 3 which further comprises conveying means for conveying of the coke, wherein the coke to be evaluated is conveyed by the conveying means.

5. A contaminant detector according to claim 2, which further comprises conveying means for conveying of the coke, wherein the coke to be evaluated is conveyed by the conveying means and the plurality of detecting elements are configured rectilinearly in the direction perpendicular to the direction of conveying by the conveying means.

6. A contaminant detector according to claim 4 or 5, wherein the conveying means is a belt conveyor comprising a belt member on which the coke to be evaluated is loaded and driving roll members that drive the belt member.

7. A contaminant removal apparatus comprising a contaminant detector according to any one of claims 1 to 6,
wherein the contaminant removal apparatus also comprises solid contaminant removal means that removes solid contaminants from coke to be evaluated in which solid contaminants have been determined to be present by the determining means.

8. A contaminant removal apparatus comprising a contaminant detector according to any one of claims 4 to 6,
wherein the contaminant removal apparatus also comprises solid contaminant removal means that removes solid contaminants from coke to be evaluated that has been determined to include solid contaminants by the determining means,
wherein the solid contaminant removal means comprises a solid contaminant container that holds the solid contaminants and conveying destination switching means that switches the conveying destination of the coke to be evaluated to the solid contaminant container.

9. A contaminant removal apparatus according to claim 8, wherein the conveying destination switching means automatically switches the conveying destination of the coke to be evaluated to the solid contaminant container after a prescribed period of time has elapsed from the point at which the solid contaminants are in the prescribed region.

10. A contaminant detection method for detection of solid contaminants present in coke, comprising:
an X-ray irradiation step in which X-rays are irradiated onto coke to be evaluated that potentially includes solid contaminants;
an X-ray intensity measuring step in which the intensity of transmitted X-rays is measured in a prescribed region of X-rays that are transmitted through the coke to be evaluated; and
a determining step in which the numerical value for the transmitted X-ray intensity is compared against a prescribed threshold value and, based on the results of the comparison, it is determined whether or not the coke to be evaluated includes solid contaminants in the prescribed region.

11. A contaminant detection method according to claim 10, wherein the transmitted X-ray intensity is detected by the plurality of detecting elements configured rectilinearly in the X-ray intensity measuring step and the detected transmitted X-ray intensity is outputted as an electrical signal.

12. A contaminant detection method according to claim 10 or 11, which further comprises a step in which simulated solid contaminants with a similar density to that of solid contaminants are placed in the prescribed region at a prescribed time interval.

13. A contaminant detection method according to any one of claims 10 to 12, wherein the coke to be evaluated is conveyed.

14. A contaminant detection method according to claim 11, wherein in the X-ray irradiation step, the X-rays are irradiated onto the coke to be evaluated which is being conveyed, and in the X-ray intensity measuring step, the transmitted X-ray intensity is detected by the plurality of detecting elements configured rectilinearly in the direction perpendicular to the direction in which the coke to be evaluated is conveyed.

15. A contaminant removal method comprising:
a contaminant detecting step in which the solid contaminants are detected by a contaminant detection method according to any one of claims 10 to 14; and
a contaminant removal step in which the detected solid contaminants are removed from the coke to be evaluated.

16. A contaminant removal method comprising;
a moving contaminant detecting step wherein solid contaminants are detected by a contaminant detection method according to claim 13 or 14, and
a conveying destination switching step wherein the conveying destination of the coke to be evaluated that contains solid contaminants is switched.

17. A contaminant removal method according to claim 16, wherein in the conveying destination switching step, the conveying destination of the coke to be evaluated is automatically switched after a prescribed period of time has elapsed from the point at which the solid contaminants are in the prescribed region.
